# EUROPÄISCHE PATENTSCHRIFT

(11) **EP 1 878 550 B1**
(45) Veröffentlichungstag und Bekanntmachung des Hinweises auf die Patenterteilung: **07.01.2009**
(21) Anmeldenummer: 07013563.7
(22) Anmeldetag: 11.07.2007
(51) Int. Cl.: B27C 3/04, B23Q 5/26, H02K 7/12, H02K 7/14, B23Q 5/10

(54) **Spindeleinheit für ein mehrspindeliges Bohraggregat**
Spindle unit for multi-spindle drilling equipment
Unité de broche pour une unité de perçage à plusieurs broches

(30) Priorität: 12.07.2006 DE 102006032189
(43) Veröffentlichungstag der Anmeldung: 16.01.2008
(73) Patentinhaber: IMA Klessmann GmbH Holzbearbeitungssysteme, 33602 Bielefeld (DE)
(72) Erfinder: Schürmann, Ralf, 32351 Stemwede (DE)
(74) Vertreter: Elbertzhagen, Otto

(56) Entgegenhaltungen:
- WO-A-03/077403
- DE-B1- 1 528 088
- DE-U- 1 876 823
- US-A- 4 869 626

## Beschreibung

Die Erfindung bezieht sich auf eine Spindeleinheit der im Oberbegriff des Patentanspruchs 1 näher bezeichneten Art.

Eine Mehr- oder Vielzahl solcher Spindeleinheiten findet sich an Bohraggregaten, die bei Holzbearbeitungsmaschinen zum Einsatz kommen und zum Anbringen von Durchgangs- und/oder Sackbohrungen an plattenförmigen Werkstücken dienen. Vornehmlich handelt es sich bei diesen Bohrungen um solche, die nach vorbestimmten Lochbildern, so auch in Gestalt von einer oder mehrerer oder auch winkliger Lochreihen, angebracht werden. Bei denjenigen Werkstücken, die als Korpusseiten bei Kastenmöbeln zum Einsatz kommen, werden die Löcher im Standardraster von 32 mm angeordnet, sie haben somit einen relativ kleinen Abstand voneinander. An dem mehrspindeligen Bohraggregat werden die Spindeleinheiten in einer Mehr- oder Vielzahl so angeordnet, daß in einem oder in mehreren Arbeitsspielen die Löcher der insgesamt vorkommenden Lochbilder gebohrt werden können. Je nach Lochbild werden nicht alle Spindeleinheiten eines Bohraggregates bei einem Bearbeitungsvorgang benötigt, und deshalb sind die Arbeitsspindeln der einzelnen Spindeleinheiten je für sich in axialer Richtung aussteuerbar.

Eine Spindeleinheit der eingangs genannten Art ist aus dem Dokument DE 15 28 088 B bekannt. Bei dieser Ausführung ist nicht nur ein pneumatischer Hilfsantrieb für das Aussteuern und Rücksteuern der Arbeitsspindel vorgesehen, es ist innerhalb der Spindeleinheit auch ein Elektromotor vorhanden, der den Drehantrieb der Arbeitsspindel für den Bohrvorgang besorgt. Der Elektromotor ist mit seinem Stator relativ zur axial verschieblichen Arbeitsspindel feststehend angeordnet, und es ist die axiale Länge des Rotors des Elektromotors um soviel größer als die axiale Länge des Stators, um nicht nur in der Arbeitsstellung, sondern auch in der Ruhelage der Arbeitsspindel eine vollständige Überdekkung des Stators durch den Rotor zu erreichen. Der Rotor des Elektromotors hat einen Durchmesser, der erheblich größer als der Durchmesser der Arbeitsspindel ist, und entsprechend groß ist der Durchmesser des Stators des Elektromotors. Das Gehäuse, durch das die Arbeitsspindel hindurchtritt, hat im Bereich des Elektromotors einen größeren Durchmesser als in seinen übrigen Bereichen, was einer durchgehend schlanken Bauform der Spindeleinheit entgegensteht. Auch ist wegen der vollständigen Überdeckung zwischen dem Stator und dem Rotor des Elektromotors sowohl in der Ruhelage als auch in der Arbeitsstellung der Verschiebehub der Arbeitsspindel nicht besonders groß.

Der Erfindung liegt die Aufgabe zugrunde, eine Spindeleinheit der vorstehend beschriebenen Art zu schaffen, die in axialer Richtung eine durchgehend schlanke Bauform aufweist.

Diese Aufgabe wird mit einer Spindeleinheit gelöst, welche die Merkmale des Patentanspruchs 1 aufweist.

Für die Erfindung ist wesentlich, daß der Aufbau des Elektromotors, wobei es insbesondere dessen Stator und Rotor betrifft, eine schlanke Bauform der Spindeleinheit ermöglicht, ohne daß in der Arbeitsstellung der Arbeitsspindel eine Leistungs- oder Drehmomentenminderung in Kauf genommen werden muß. Zwar fährt bis zum Erreichen der Ruhelage der Arbeitsspindel der darauf fest angeordnete Rotor aus der Überdeckung mit dem Stator des Elektromotors teilweise heraus, weswegen dann nicht mehr die volle Leistung oder das maximale Drehmoment vom Elektromotor aufgebracht werden kann. Dies stört jedoch nicht, weil bei der Aktivierung der Spindeleinheit in der Ruhelage der Arbeitsspindel vom Elektromotor lediglich ein Anlaufdrehmoment aufgebracht werden muß, welches geringer als das Arbeitsdrehmoment ist. Das Arbeitsdrehmoment steigt mit zunehmender Überdeckung zwischen dem Rotor und dem Stator des Elektromotors beim Verschieben der Arbeitsspindel an, dies entspricht dem zunehmendem Widerstandsmoment insbesondere beim Bohren mit zunehmender Bohrtiefe.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: einen Längsschnitt durch eine Spindeleinheit für ein mehrspindeliges Bohraggregat mit in der Ruhelage befindlicher Arbeitsspindel und
- Fig. 2: in gleicher Darstellung die Spindeleinheit gemäß Fig. 1 jedoch mit ausgesteuerter Arbeitsspindel.

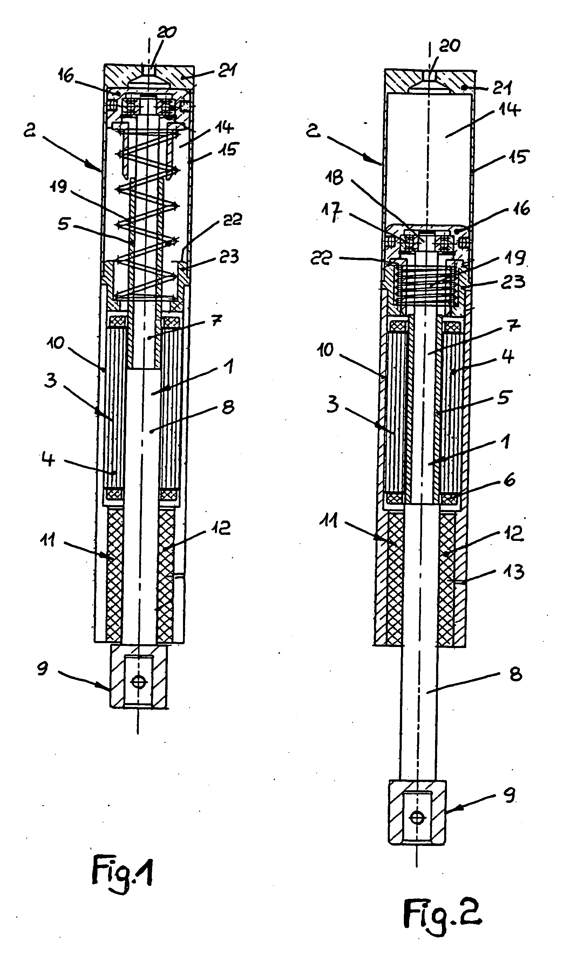

Im einzelnen zeigt Fig. 1 eine Arbeitsspindel 1, die in axialer Richtung zwischen einer in Fig. 1 dargestellten Ruhelage und einer in Fig. 2 wiedergegebenen End-Arbeitsstellung in axialer Richtung verschieblich ist. Für die Verschiebung der Arbeitsspindel 1 ist ein Hilfsantrieb 2 vorgesehen, der nachstehend noch näher erläutert werden wird.

Ferner weist die Arbeitsspindel 1 einen Drehantrieb in Gestalt eines Elektromotors 3 auf. Der Elektromotor 3 hat eine längliche, schlanke Bauform, dementsprechend sind der äußere Stator 4 und der innere Rotor 5 des Elektromotors 3 ebenfalls längliche Gebilde mit zylindrischer Form. Der Stator 4 des Elektromotors 3 erzeugt am Luftspalt zum Rotor 5 hin ein Drehfeld, hierfür ist eine elektrische Erregung mittels einer Wicklung 6 vorgesehen, die am Stator 4 angeordnet ist. Der Rotor 5 hat einen hülsenförmigen Aufbau und ist mit Permanentmagneten versehen, die mit dem vom Stator 4 erzeugten Drehfeld zusammenwirken.

Der Rotor 5 des Elektromotors 3 sitzt fest auf der Arbeitsspindel 1. Die Arbeitsspindel 1 weist einen abgesetzten, im Durchmesser kleineren Abschnitt 7 auf, entlang dem der Rotor 5 des Elektromotors 3 mit der Arbeitsspindel 1 nicht nur drehfest sondern auch in axialer Richtung fest verbunden ist.

Am freien Ende der Arbeitsspindel 1 ist eine Werkzeugaufnahme 9 angeordnet, in der jedoch nicht nur ein Werkzeug, insbesondere ein Bohrwerkzeug, aufgenommen, sondern an die auch ein Winkelgetriebe angekuppelt werden kann, sofern die Spindeleinheit nur als Antriebseinheit ohne die axiale Verschiebung der Arbeitsspindel 1 genutzt wird. Zwischen dem Abschnitt 7 und der Werkzeugaufnahme 9 weist die Arbeitsspindel 1 einen Abschnitt 8 auf, der einen größeren Durchmesser als der Abschnitt 7 hat. Der Durchmesser des Abschnittes 8 ist gleich dem Außendurchmesser des auf dem Abschnitt 7 der Arbeitsspindel 1 fest aufgesetzten Rotors 5 des Elektromotors 3. Der im Durchmesser größere Abschnitt 8 der Arbeitsspindel 1 ist durch ein erstes Spindellager 11 hindurchgeführt. Hierbei handelt es sich um ein sogenanntes Luftlager mit einer länglichen Lagerhülse 12, zwischen der und dem Spindelabschnitt 8 ein Luftpolster aufgebaut wird. Dafür ist zwischen der Lagerhülse 12 und dem Spindelabschnitt 8 ein geringer Ringspalt vorgesehen, in welchen Luft eingedrückt wird, die über einen Luftanschluß 13 zugeführt wird. Zumindest ein Teil der Luft tritt aus dem erwähnten Ringspalt am freien Ende der Lagerhülse 12 aus und verhindert somit zugleich ein Eindringen von Staub oder sonstigen Partikeln in den Ringspalt zwischen der Lagerhülse 12 und dem Spindelabschnitt 8. Ein weiterer Teil der Luft kann von der Lagerhülse 12 aus zwecks Kühlung durch den Elektromotor 3 hindurchgeleitet werden.

Der Elektromotor 3 und die Lagerhülse 12 sind in einem rohrförmigen, zylindrischen Gehäuse 10 aufgenommen, an dem sich der erwähnte Luftanschluß 13 befindet. Der Elektromotor 3 ist ein sogenannter gehäuseloser Motor, deshalb stützt sich sein Stator 4 unmittelbar an der Innenwandung des Gehäuses 10 ab, welches somit den Elektromotor eng umschließt. Ebenso wie der Stator 4 des Elektromotors 3 ist die Lagerhülse 12 im Gehäuse 10 fest sitzend angeordnet.

Der Hilfsantrieb 2 für die Axialverschiebung der Arbeitsspindel 1 besteht aus einem Pneumatikzylinder 14 mit einem Zylindermantel 15, der mit gleichem Durchmesser koaxial an das Gehäuse 10 anschließt. Für die Verbindung des Zylindermantels 15 und des rohrförmigen Gehäuses 10 ist eine Verbindungshülse 23 vorgesehen, auf die von der einen Stirnseite her der Zylindermantel 15 und von der anderen Stirnseite her das Gehäuse 10 aufgesteckt ist. Im Zylindermantel 15 ist der Kolben 16 des Pneumatikzylinders 14 geführt, und in dem Kolben 16 ist ein zweites Spindellager 17 aufgenommen, welches als Wälzlager ausgeführt ist und in das ein abgesetztes Ende 18 der Arbeitsspindel 1 eingreift.

Bei dem Pneumatikzylinder 14 handelt es sich um einen einfach wirkenden Zylinder mit einem einzigen Druckluftanschluß 20 am Zylinderboden 21. Bei Druckbeaufschlagung des Pneumatikzylinders 14 fährt der Kolben 16 unter Mitnahme der Arbeitsspindel 1 vom Zylinderboden 21 weg und schlägt in der gegenüberliegenden Endlage an einem Anschlag 22 an. Der Anschlag 22 wird von einer Stirnfläche der Verbindungshülse 23 gebildet. Bei Erreichen des Anschlags 22 hat die Arbeitsspindel 1 ihre in Fig. 2 dargestellte, ausgesteuerte Arbeitsstellung eingenommen. Die Rückführung der Arbeitsspindel 1 in ihre Ruhelage erfolgt bei drucklos gemachtem Pneumatikzylinder 14 über eine Rückstellfeder 19, die den Kolben 16 unter Mitnahme der Arbeitsspindel 1 bis zur Anlage am Zylinderboden 21 zurückführt. Hiernach hat die Arbeitsspindel 1 die in Fig. 1 wiedergegebene Ruhelage eingenommen. Sofern mit der Spindeleinheit gebohrt wird, stellt die Verschiebung der Arbeitsspindel 1 von ihrer Ruhelage weg den Vorschub des in der Werkzeugaufnahme 9 gehaltenen Bohrwerkzeugs dar. Insoweit ist die in Fig. 2 dargestellte Arbeitsstellung die zweite Endlage der Arbeitsspindel 1 gegenüber der ersten Endlage, der Ruhelage.

Wie Fig. 1 weiter deutlich macht, ist in der Ruhelage der Arbeitsspindel 1 der Rotor 5 des Elektromotors 3 aus dem Stator 4 herausgefahren, es liegt jedoch noch eine Teilüberlappung zwischen dem Rotor 5 und dem Stator 4 vor. So kann auch in der Ruhelage der Arbeitsspindel 1 auf den Rotor 3 noch ein Drehmoment übertragen werden, wenngleich dies gegenüber dem aufzubringenden Arbeitsdrehmoment beim Bohrvorgang geringer ist. Da der zweite, im Durchmesser größere Abschnitt 8 der Arbeitsspindel 1 den gleichen Außendurchmesser wie der auf dem Abschnitt 7 der Arbeitsspindel 1 festsitzende Rotor 5 des Elektromotors 3 hat, kann zum Erreichen der Ruhelage der Arbeitsspindel 1 deren Abschnitt 8 in den Stator 4 des Elektromotors 3 eintauchen, ohne daß sich der Luftspalt zum Stator 4 des Elektromotors 3 hin ändert. So hat die Arbeitsspindel 1 entlang ihrem Abschnitt 8 bis zur Werkzeugaufnahme 9 hin den größtmöglichen Durchmesser, was für die Luftlagerung innerhalb der Lagerhülse 12 von Vorteil ist. In jedem Fall hat der Abschnitt 8 der Arbeitsspindel 1 einen solchen Durchmesser, daß es bei der Verschiebung der Arbeitsspindel 1 nicht zu einer Kollision mit dem Stator 4 des Elektromotors 3 kommen kann. Die Länge des Abschnittes 8 der Arbeitsspindel 1 ist vorteilhaft so bemessen, daß in der Ruhelage der Arbeitsspindel 1 die Werkzeugaufnahme 9 nahe an den miteinander bündigen Enden der Lagerhülse 12 und des Gehäuses 10 angeordnet ist.

Wie man in Fig. 2 erkennt, hat der hülsenförmige Rotor 5 des Elektromotors 3 zumindest eine axiale Länge, die gleich der axialen Länge des Stators 4 des Elektromotors 3 ist. So herrscht in der ausgesteuerten Arbeitsstellung der Arbeitsspindel 1 eine volle Überdeckung zwischen dem Stator 4 und dem Rotor 5 des Elektromotors 3. Deshalb kann mit dem Vorschub der Arbeitsspindel 1 zu der ausgesteuerten Arbeitsstellung hin ein immer größeres Drehmoment von dem Elektromotor 3 aufgebracht werden.

## Patentansprüche

1. Spindeleinheit für ein mehrspindeliges Bohraggregat mit einer von einer Ruhelage in eine Arbeitsstellung axial verschieblichen, durch ein Gehäuse (10) hindurch sich erstreckenden Arbeitsspindel (1) mit einer Werkzeugaufnahme (9) an ihrem freien Ende und mit einem an ihrem anderen Ende angreifenden Verschiebeantrieb (2), ferner mit einem die Arbeitsspindel (1) drehend antreibenden Elektromotor (3) mit einem im Gehäuse (10) angeordneten Stator (4) und einem Rotor (5), der sowohl drehfest als auch in axialer Richtung fest auf der Arbeitsspindel (1) angeordnet ist,
**dadurch gekennzeichnet,**
**daß** der Stator (4) und der Rotor (5) des Elektromotors (3) in Bezug auf den Verschiebehub der Arbeitsspindel (1) derart aufeinander abgestimmte Längen in axialer Richtung haben, daß in der Ruhelage der Arbeitsspindel (1) der Rotor (5) teilweise aus der Überdeckung mit dem Stator (4) herausgefahren ist, wobei der in der Ruhelage der Arbeitsspindel (1) in den Stator (4) eintauchende, zur Werkzeugaufnahme (9) hin an den Rotor (5) anschließende Abschnitt (8) der Arbeitsspindel (1) einen Durchmesser gleich oder kleiner als der Durchmesser des Rotors (5) aufweist.

2. Spindeleinheit nach Anspruch 1,
**dadurch gekenntzeichnet,**
**daß** der Rotor (5) des Elektromotors (3) als zylindrischer Hüllkörper auf einem im Durchmesser relativ zu dem zur Werkzeugaufnahme (9) anschließenden Abschnitt (8) verringerten Teilbereich (7) der Arbeitsspindel (1) angeordnet ist und den gleichen Durchmesser wie der Abschnitt (8) der Arbeitsspindel (1) hat.

3. Spindeleinheit nach Anspruch 1 oder 2,
**dadurch gekennzeichnet,**
**daß** der Stator (4) und der Rotor (5) des Elektromotors (3) in axialer Richtung derart aufeinander abgestimmte Längen haben, daß in der Arbeitsstellung der Arbeitsspindel (1) der Stator (4) den Rotor (5) in radialer Richtung am dazwischen befindlichen Luftspalt vollständig überdeckt.

4. Spindeleinheit nach einem der Ansprüche 1 - 3,
**dadurch gekennzeichnet,**
**daß** der Elektromotor (3) mit seinem Stator (4) so ausgebildet ist, daß am Luftspalt ein magnetisches Drehfeld erzeugt wird, wobei die magnetisch aktiven Teile des Rotors (5) Permanentmagnete sind.

5. Spindeleinheit nach einem der Ansprüche 1 - 4,
**dadurch gekennzeichnet,**
**daß** in dem Gehäuse (10) anschließend an den Stator (4) des Elektromotors (3) ein erstes Spindellager (11) zur radialen Stützung des zur Werkzeugaufnahme (9) hin liegenden Abschnitts (8) der Arbeitsspindel (1) angeordnet ist.

6. Spindeleinheit nach Anspruch 5,
**dadurch gekennzeichnet,**
**daß** das erste, zur Werkzeugaufnahme (9) hinliegende Spindellager (11) der Arbeitsspindel (1) als Luftlager mit einer länglichen Lagerhülse (12) ausgebildet ist, für das ein Luftanschluß (13) an dem den Elektromotor (3) aufnehmenden Gehäuse (10) angeordnet ist.

7. Spindeleinheit nach einem der Ansprüche 1 - 6,
**dadurch gekennzeichnet,**
**daß** an das den Elektromotor (3) aufnehmende Gehäuse (10) koaxial ein Zylindermantel (15) eines Pneumatikzylinders (14) angesetzt ist, welcher Teil des Verschiebeantriebs (2) für die Arbeitsspindel (1) ist und einen im Zylindermantel (15) geführten Kolben (16) aufweist, in welchem ein zweites Spindellager (17) angeordnet ist, in welchem das von der Werkzeugaufnahme (9) abliegende Ende (18) der Arbeitsspindel (1) aufgenommen ist.

8. Spindeleinheit nach Anspruch 7,
**dadurch gekennzeichnet,**
**daß** das Gehäuse (10) für den Elektromotor (3) und der Zylindermantel (15) für den Pneumatikzylinder (14) längliche rohrförmige Gebilde sind, die zylindrische Außenseiten mit demselben Durchmesser aufweisen.

## Claims

1. Spindle unit for a multi-spindle drilling apparatus with a work spindle (1) which can be axially displaced from a rest position into a work position and extends through a housing (10), with a tool mount (9) on its free end and with a displacement drive (2) engaging on its other end, further with an electric motor (3) driving the work spindle (1) in rotation with a stator (4) arranged in the housing (10) and a rotor (5) which is arranged so as to be both rotationally secured and also fixed in the axial direction on the work spindle (1),
**characterised in that**
the stator (4) and the rotor (5) of the electric motor (3) in relation to the displacement stroke of the work spindle (1) have such lengths oriented to each other in the axial direction that in the rest position of the work spindle (1) the rotor (5) is partially moved out of the overlap with the stator (4), whereby the section (8) of the work spindle (1) penetrating the stator (4) in the rest position of the work spindle (1) and connected to the rotor (5) facing the tool mount (9) has a diameter that is equal to or smaller than the diameter of the rotor (5).

2. Spindle unit according to claim 1,
**characterised in that**
the rotor (5) of the electric motor (3) is arranged as a cylindrical shell body on a sub-region (7) of the work spindle (1) that has a smaller diameter than that of the section (8) connecting to the tool mount (9) and has the same diameter as the section (8) of the work spindle (1).

3. Spindle unit according to claim 1 or 2,
**characterised in that**
the stator (4) and the rotor (5) of the electric motor (3) have lengths oriented to each other in the axial direction in such a way that in the work position of the work spindle (1) the stator (4) completely overlaps the rotor (5) in the radial direction against the air gap located therebetween.

4. Spindle unit according to one of the claims 1 - 3,
**characterised in that**
the electric motor (3) is formed with its stator (4) in such a way that a rotating magnetic field is produced in the air gap, whereby the magnetically active parts of the rotor (5) are permanent magnets.

5. Spindle unit according to one of the claims 1 - 4,
**characterised in that**
a first spindle bearing (11) for radial support of the section (8) of the work spindle (1) facing the tool mount (9) is arranged in the housing (10) connecting to the stator (4) of the electric motor (3).

6. Spindle unit according to claim 5,
**characterised in that**
the first spindle bearing (11) of the work spindle (1) facing the tool mount (9) is formed as an air bearing with an elongated bearing socket (12), for which an air connection (13) is arranged on the housing (10) accommodating the electric motor (3).

7. Spindle unit according to one of the claims 1 - 6,
**characterised in that**
a cylindrical shell (15) of a pneumatic cylinder (14) is arranged coaxially on the housing (10) accommodating the electric motor (3), is part of the displacement drive (2) for the work spindle (1) and comprises a piston (16) guided in the cylindrical shell (15), in which a second spindle bearing (17) is arranged, in which the end (18) of the work spindle (1) lying away from the tool mount (9) is arranged.

8. Spindle unit according to claim 7,
**characterised in that**
the housing (10) for the electric motor (3) and the cylindrical shell (15) for the pneumatic cylinder (14) are elongated tubular elements which comprise cylindrical outer faces with the same diameter.

## Revendications

1. Unité de broche pour une unité de perçage à plusieurs broches, avec un broche de travail (1) qui, s'étendant à travers un boîtier (10), peut être déplacée axialement d'une position de repos à une position de travail, avec un porte-outil (9) à sont extrémité libre et avec un entraînement de déplacement (2) attaquant son autre extrémité, de plus avec un moteur électrique (3) entraînant en rotation la broche de travail (1) avec un stator (4) disposé dans le boîtier (10) et un rotor (5) qui est agencé fixement, aussi bien solidaire en rotation que dans la direction axiale, sur la broche de travail (1),
**caractérisée en ce que**
le stator (4) et le rotor (5) du un moteur électrique (3), par rapport au parcours de déplacement de la broche de travail (1), présentent des longueurs en direction axiale qui sont adaptées l'une à l'autre de sorte, lorsque la broche de travail (1) est position de repos, le rotor (5) est conduit partiellement hors du recouvrement avec le stator (4), la section (8) de la broche de travail (1) qui, se raccordant au rotor (5), plonge dans le stator (4), vers le porte-outil (9), présente un diamètre qui est égal ou inférieur au diamètre du rotor (5).

2. Unité de broche selon la revendication 1,
**caractérisée en ce que**
le rotor (5) du un moteur électrique (3) est installé, en tant que corps enveloppant, cylindrique sur une section partielle (7) de la broche de travail (1) dont le diamètre est réduit par rapport à section (8) se raccordant au porte-outil (9) et présente le même diamètre que la section (8) de la broche de travail (1).

3. Unité de broche selon revendication 1 ou 2,
**caractérisée en ce que**
le stator (4) et le rotor (5) du un moteur électrique (3) présentent des longueurs adaptées l'une à l'autre, dans la direction axiale, de sorte que, lorsque la broche de travail (1) est en position de repos, le stator (4) recouvre complètement le rotor (5), dans la direction radiale, sur l'entrefer y intercalé.

4. Unité de broche selon l'une des revendications 1 à 3,
**caractérisée en ce que**
le un moteur électrique (3), avec son stator (4), est configuré de sorte que sur l'entrefer est généré un champ magnétique, rotatif, les pièces du rotor (5) magnétiquement actives étant des aimants permanents.

5. Unité de broche selon l'une des revendications 1 à 4,
**caractérisée en ce que,**
dans le boîtier (10), à la suite du stator (4) du moteur électrique (3), un premier logement de broche (11) est agencé pour le support radial de la section (8) de la broche de travail (1), située vers le porte-outil (9).

6. Unité de broche selon la revendication 5,
**caractérisée en ce que**
le premier logement de broche (11) de la broche de travail (1), située vers le porte-outil (9) est réalisé en tant que palier d'air avec une douille de forme allongée (12) pour lequel un raccord d'air (13) est agencé sur le boîtier (10) accueillant le moteur électrique (3).

7. Unité de broche selon l'une des revendications 1 à 6,
**caractérisée en ce que,**
sur le boîtier (10) accueillant le un moteur électrique (3), est ajouté coaxialement une gaine cylindrique (15) d'un vérin pneumatique (14) qui fait partie de l'entraînement de déplacement (2) de la broche de travail (1) et qui présente un piston (16) qui est conduit dans la gaine cylindrique (15) et dans lequel est installée un deuxième logement de broche (17), dans lequel est logée l'extrémité (18) de la 1 qui est orienté à l'opposé du porte-outil (9).

8. Unité de broche selon la revendication 7,
**caractérisée en ce que**
le boîtier (10) du moteur électrique (3) et la gaine cylindrique (15) du vérin pneumatique (14) sont des complexes allongés, en forme de tubes, qui présentent des faces extérieurs cylindriques de même diamètre.
